# EUROPEAN PATENT APPLICATION

(11) **EP 3 620 628 A1**
(43) Date of publication of application: **11.03.2020**
(21) Application number: 18192359.0
(22) Date of filing: 04.09.2018
(51) Int. Cl.: F02B 19/08, F02B 19/12, F02B 19/10, F02B 19/18

(54) **PRE-CHAMBER**

(71) Applicant: Winterthur Gas & Diesel Ltd., 8401 Winterthur (CH)
(72) Inventor: IMHASLY, David, 8400 Winterthur (CH); OTT, Marcel, 8495 Winterthur (CH); CARELLI, Andreas, 8305 Dietlikon (CH); HÄNFLING, Adrian, 9542 Münchwilen (CH); RÄSS, Konrad, 8457 Humlikon (CH)
(74) Representative: Hepp Wenger Ryffel AG

(57) **Abstract**

The invention relates to pre-chambers for a cylinder of an internal combustion engine and to a cylinder device.

The pre-chamber (9) comprises an ignition chamber 12 for igniting of the gas-air mixture and a duct (4) for connecting the ignition chamber (12) with a main combustion chamber (21) of the cylinder. The pre-chamber (12) comprises a housing (11) with an integrated, and preferably autarkic, cooling assembly (28).

The cylinder device may comprise exactly one pre-chamber 9, wherein the duct (4) comprises a first duct section (13) with an inlet opening (6) of the duct (4) to the ignition chamber (12), the first duct section (13) having a first longitudinal axis (5). The ignition chamber longitudinal axis (3) has an inclination relative to the first longitudinal axis (5). The inlet opening (6) is arranged eccentrically, such that a tumble flow motion is formable in an ignition chamber. The duct (4) comprises exactly one outlet opening (7) which is arranged such that a gas-air mixture beam is formable. Edges (8) at the inlet opening (6) are designed as soft edges. The duct (4) comprises a second duct section (19) comprising a second longitudinal axis (14), which is inclined relative to the first longitudinal axis (5) and to the ignition chamber longitudinal axis (3)

## Description

The invention relates to pre-chambers for a cylinder of an internal combustion engine, to cylinder devices and a method for feeding a gas-air mixture from a pre-chamber to a combustion chamber of an internal combustion engine.

Large-bore, lean-operating gas engines generally include a pre-chamber assembly in order to ensure ignition processes in the engine. The pre-chamber includes a pre-chamber volume, which is in fluid communication with a main combustion chamber of the cylinder via small orifices.

Pre-chambers are utilised especially in so-called lean-burn-engines where a powerful ignition source is needed. In this case, a pre-chamber is used to provide a high energy for igniting the lean gas mixture in a main combustion chamber. In the pre-chamber the lean basic air-gas mixture coming from the main combustion chamber can be ignited either by the injection of a proper fuel, reactive in the excess of air and self-igniting beyond certain pressure and temperature conditions, or by means of a glow plug or a spark plug, combined with a local stoichiometric air-gas mixture that might be obtained adding the proper amount of gas directly in the pre-chamber. The shape of the pre-chamber is dependent on the actual method of ignition. Pilot fuel ignition with or without glow plug can provide higher ignition energy than a conventional spark pre-chamber ignition system. The requirements are generally fast and repeatable mixing of the basic air-gas fuel mixture introduced into the pre-chamber and of the pilot fuel to be injected. Although a number of pre-chamber arrangements are known, they are not able to meet the requirements described above at the same time.

Ignition of the mixture of gaseous fuel and air creates a front of burning fuel which is introduced in the main combustion chamber. The pre-chamber assembly is subjected to high temperatures, especially where turbochargers are employed and engines are operating at high power density levels. In particular, some of the highest temperatures occur here during operation of the internal combustion engine. Consequently the service live of the pre-chamber is a crucial factor for the longevity of internal combustion engines.

As for example disclosed in DE 10 2014 0116911 a pre-chamber may at least partially arranged in an opening in a cylinder cover, wherein there is provided a cooling cavity substantially surrounding the pre-chamber system such that a cooling fluid may get in contact with the outside surface of the pre-chamber. Additionally, the pre-chamber may have bores, which are in fluid contact with the cooling cavity, as disclosed for example in US201767356.

However, when a pre-chamber shall be removed or changed, the cooling fluid first has to be removed and it has to be assured, that the cooling cavity is closed with respect to the cylinder volume. Seals have to be applied which complicates the assembly of the pre-chamber.

US 5,293,851 discloses a combustion system for a gas engine comprising a pre-chamber. The pre-chamber is connected to the main combustion chamber by a simple duct. The duct is not flow-optimized and comprises sharp edges to the pre-chamber which leads to a short life cycle and a poor distribution of gas/air mixture being fed into the cylinder, especially in case of large engines, such as ship engines.

Flow optimized pre-chambers are disclosed in EP 2 975 237, being designed with soft edges.

In DE 197 03 309 a pre-chamber is disclosed being produced from two parts. The pre-chamber is built symmetrically such that any flow going through the duct will lead to a vortex more than to a defined tumble flow motion.

WO 2009/109694 discloses a pre-chamber arrangement for an Otto cycle including several openings for symmetrically distributing the ignited gas/air mixture in a cylinder combustion chamber. Such a pre-chamber is prone to a frequent exchange of the part comprising the openings due to the high temperature destroying the small metal bridges between the openings.

It is therefore an object of the present invention to avoid the drawbacks of the prior art and to create a pre-chamber and a cylinder device, wherein the pre-chamber can be optimally arranged with respect to the cylinder device and wherein an optimized lifetime is provided.

The object is accomplished by a pre-chamber for a cylinder of an internal combustion engine for ignition of a gas/air mixture comprising an ignition chamber for igniting of the gas-air-mixture and a duct for connecting the ignition chamber with a main combustion chamber of the cylinder. Preferably there is exactly one duct.

The pre-chamber comprises a housing with an integrated, and preferably autarkic, cooling assembly.

"Autarkic" means that cooling is independent of the cylinder. Thus, if the pre-chamber is removed from the cylinder or is not fully assembled to the cylinder, cooling still is possible. For example, a fluid connection may be established directly between the cooling assembly and a cooling fluid source as well as a cooling fluid hollow, without any contact between the cooling fluid and a part of the cylinder. Preferably the cooling assembly is closed off with respect to the cylinder.

In a preferred embodiment the housing comprises at least one cooling channel. Preferably the diameter of the channel is 0.2-0.8 times the local wall thickness.

Water or oil may be used as cooling fluid.

A plurality of cooling channels may be arranged in the housing. Cooling channels are suitable for the passage of a cooling fluid, in particular, a cooling liquid, such as water.

The at least one cooling channel has an inlet for a fluid connection to a cooling fluid source and an outlet for a fluid connection to a cooling fluid sink. The cooling fluid source and the cooling fluid sink may be established by the same cooling fluid reservoir. Preferably the pre-chamber comprises exactly one cooling fluid inlet and exactly one cooling fluid outlet.

The part of the pre-chamber comprising the duct is typically called the lower part of the pre-chamber. The lower part of the pre-chamber is positioned in the cover or in the liner of the cylinder when the pre-chamber is assembled. The part pointing away of the lower part is called the upper part of the pre-chamber. Typically at least a part of the upper part protrudes from the cylinder cover or liner. Preferably the cooling fluid inlet and the cooling fluid outlet are arranged in the upper part of the pre-chamber, which points away from the part of the pre-chamber where the duct is arranged.

Preferably the cooling fluid inlet and the cooling fluid outlet are arranged in the upper part of a two-part pre-chamber.

The at least one cooling channel may be arranged only in the upper part of a two-part pre-chamber. Preferably, the cooling channel is arranged in the upper and lower part of a two-part pre-chamber.

Hence the cooling fluid may be directly supplied to the pre-chamber without flowing through or along any part of the cylinder.

The pre-chamber, in particular at least the lower part of the pre-chamber, may be formed by a 3D-printing process or a powder metallurgical process. The pre-chamber may be made from a nickel-based material, such as KFS99 or NiCr50.

In an advantageous embodiment the housing of the pre-chamber comprises an inner housing and a casing for holding cooling fluid close to inner housing.

The casing preferably is made of a metal sheet. The casing may be made of a corrosion resistant alloy, Co-Cr-alloys or NI-Cr-alloys, like Nimonic 80A or NICR50. The material used may be an alloy as disclosed in EP227572 B1.

Cooling channels may be located between the inner housing and the casing. For example a tube may be arranged in the space between the inner housing and the casing. Alternatively the space between the housing and the casing may be traversed by a coolant.

The object of the invention is also accomplished by a cylinder device comprising a combustion cylinder and a pre-chamber as described above.

Preferably, the cylinder device may be used in a large ship engine. A large ship engine according to this invention is an internal combustion engine whose cylinders have an inner diameter of at least 100mm, preferably 200mm.

The engine preferably is a two-stroke, cross-head engine. The engine can be a diesel or a dual-fuel engine.

The object of the invention is also accomplished by a cylinder device, preferably as described above, preferably for a large ship engine, comprising a combustion cylinder and a pre-chamber for ignition of a gas/air mixture.

According to the invention there is a connection between the pre-chamber, preferably a lower part of the pre-chamber, and the combustion cylinder, preferably a cover and/or a liner of the combustion cylinder, that allows a direct heat transfer between the pre-chamber and the combustion cylinder.

Heat may thus be transferred from the housing and/or the casing of the pre-chamber directly to the cover and/or liner of the cylinder.

Additionally, heat may be led away from the pre-chamber by an integrated cooling system.

The cylinder may comprise a cooling system, for example cooling channels arranged in the liner and/or cover, which promote removal of the heat.

Preferably, there is a press fit connection between the pre-chamber and the combustion cylinder.

Preferably, the contact face between the pre-chamber and the combustion cylinder is mainly formed as a circular cylinder, wherein the ratio between the radius and the lengths is 0.5-2, in particular 1.

Thus, the contact face has a sufficient large area to provide an appropriate heat transfer.

At least the lower part of the pre-chamber and the liner and/or the cover of the cylinder comprise metal or are made of metal. Hence, heat may be transferred to the contact area and away from the contact area, especially if there is a heat gradient. A heat gradient, encouraging a heat transfer from the pre-chamber to the cylinder, may be provided by a cooling agent, for example in a cooling system of the cylinder.

In a beneficial embodiment of the cylinder device the pre-chamber comprises an ignition chamber for igniting of the gas-air mixture with an ignition chamber longitudinal axis and a duct for connecting the ignition chamber with a main combustion chamber of the cylinder.

Preferably the duct is arranged in the lower part of a two-part pre-chamber.

Preferably at least a part of the housing of the upper part of the pre-chamber has a cylindrical shape. Typically the ignition chamber longitudinal axis is parallel to the respective cylindrical axis.

The duct comprises a first duct section with an inlet opening of the duct to the ignition chamber. The first duct section has a first longitudinal axis.

The ignition chamber longitudinal axis has an inclination relative to the first longitudinal axis.

The inlet opening is arranged eccentrically, such that a tumble flow motion is formable in an ignition chamber. Preferably edges at the inlet opening are designed as soft edges.

In the context of this application the term soft edge means that two surfaces, for example the surface of the inlet opening and the surface of the ignition chamber, merge into other, without an edge at which the surface cannot be continuously differentiated.

The duct comprises a, preferably exactly one, outlet opening which is arranged such that a gas-air mixture beam is formable.

The duct comprises a second duct section comprising a second longitudinal axis, which is inclined relative to the first longitudinal axis and to the ignition chamber longitudinal axis.

Such an arrangement leads to an optimized distribution of gas and air and hence to an optimized ignition in the pre-chamber and in the main combustion chamber of the cylinder. Furthermore, the lifetime of the pre-chamber is extended.

According to a further aspect the object of the invention is accomplished by a cylinder device, preferably as described above, preferably for a large ship engine, comprising a combustion cylinder and exactly one pre-chamber for ignition of a gas/air mixture.

The pre-chamber comprises an ignition chamber for igniting of the gas-air-mixture with an ignition chamber longitudinal axis and a duct for connecting the ignition chamber with a main combustion chamber of the combustion cylinder.

The duct comprises a first duct section with an inlet opening of the duct to the ignition chamber.

The first duct section has a first longitudinal axis. The ignition chamber longitudinal axis has an inclination relative to this first longitudinal axis.

The inlet opening is arranged eccentrically, such that a tumble flow motion is formable in an ignition chamber.

Edges at the inlet opening are designed as soft edges.

The duct comprises exactly one outlet opening which is arranged such that a gas-air mixture beam is formable.

The duct comprises a second duct section comprising a second longitudinal axis, which is inclined relative to the first longitudinal axis and to the ignition chamber longitudinal axis.

In a preferred embodiment the pre-chamber is arranged eccentrically with respect to the main axis of the combustion cylinder, preferably close to an inner diameter of the cylinder liner, preferably close to the inner diameter of the cylinder liner in the cylinder cover.

Close to the inner diameter of the cylinder liner according to the invention means that the pre-chamber is arranged closer to the inner diameter of the cylinder liner than to the cylinder axis of the cylinder device.

The arrangement results in an asymmetrical flow of the gas-air mixture into the main combustion chamber relative to the main axis of the combustion chamber.

Preferably the outlet opening of the duct provides a main outflow direction, which is not directed towards the main axis of the cylinder.

An internal combustion engine typically comprises at least one piston which is arranged in a cylinder. The piston is driven by a piston rod which is connected to a crankshaft. The degree of rotation of the crankshaft is used to indicate the position of the piston inside the cylinder. The piston and the cylinder define a variable main combustion chamber and a variable second chamber. Typically, the piston moves upwards and downwards inside the cylinder and thus divides the cylinder in an upper and a lower space. Said upper space defines the combustion chamber and said lower space defines the second chamber. The size of said chamber is dependent on the actual position of the piston.

The second chamber is fluidly connectable and in particular connected to the compressor side of a turbocharger via at least one inlet opening to introduce a compressed air flow into the second chamber. Further, the main combustion chamber is connectable and in particular connected to the turbine side of the turbo charger via a cylinder exhaust opening. The main combustion chamber also is connectable and in particular connected to said compressor side of a turbocharger via the inlet opening at the lower end of the cylinder when the piston is in its lower dead center (BDC).

The gas-air mixture flowing from the pre-chamber into the combustion chamber combines with the gas-air mixture in the combustion chamber. The tangential inflow promotes or generates a circular flow in the combustion chamber. Such a design enables an optimized distribution of the ignited gas-air mixture into the main combustion chamber.

Preferably the pre-chamber is a pre-chamber with a cooling system as described above.

The second duct section may have a cylindrical part or may taper towards the outlet opening. The internal opening area of the second duct section may also narrow towards the outlet opening such that the second duct section forms a nozzle which accelerates the outflowing gas-air mixtures. The gas-air mixture is introduced farther into the main combustion chamber.

The ratio of the volume of the ignition chamber and the cross-section of the outlet opening may be between 200 mm and 1000 mm.

Such a ratio of the volumes leads to an optimized flow and flow velocity of the gas-air mixture into the combustion chamber of the cylinder device.

The volume of the ignition chamber corresponds to the volume of the pre-chamber except the volume of the duct.

The first longitudinal axis can be arranged at an angle of substantially 0.1° to 80° relative to the ignition chamber longitudinal axis, preferably 10° to 45° and most preferably 16° to 30° relative to the ignition chamber longitudinal axis.

The second longitudinal axis can be arranged at an angle of substantially 0.2° to 90° relative to the ignition chamber longitudinal axis, preferably 20° to 80° and most preferably 45° to 66° relative to the ignition chamber longitudinal axis.

The second duct section may be arranged at an angle of substantially 0.1° to 90°, preferably of 40° to 85°, more preferably 70° to 80°, relative to the main axis of the cylinder.

Such a duct leads to an optimal asymmetric distribution of gas-air mixture within the combustion chamber.

In an advantageous embodiment the duct comprises a curved section. Preferably the curved section comprises a radius of curvature in a range of one half times a maximum cross section of the ignition chamber normal to the ignition chamber longitudinal axis to two times a maximum cross section of the ignition chamber normal to the ignition chamber longitudinal axis.

Such a duct is flow-optimized and leads to an optimal flow velocity.

Preferably, at least the pre-chamber lower part is produced by casting, precision casting, by a 3d-printing process or a powder metallurgical process.

In preferred embodiment the pre-chamber comprises ignition means for ignition of the gas-air mixture, preferably an ignition plug, which extends into an ignition chamber.

Ignition means lead to the ignition of the gas-air mixture in the pre-chamber and thereby to an efficient combustion with increased combustion stability.

The pre-chamber can comprise a fuel feed, by means of which fuel is feedable into the pre-chamber. The fuel feed is an alternative to an ignition means in case a self-ignition is used.

The housing of the upper part of the pre-chamber may comprise an opening for inserting the ignition means or the fuel feed. The opening may comprise a cylindrical part, wherein the respective cylindrical axis is parallel to the ignition chamber longitudinal axis.

The pre-chamber may comprise a top section and a lower part, which is designed asymmetrically relative to the ignition chamber longitudinal axis. Preferably the top section and the lower part are manufactured independently as separate parts of the pre-chamber and are assembled to form the pre-chamber.

The pre-chamber may be arranged in the cylinder cover and/or in the cylinder liner.

Preferably the pre-chamber contacts the cylinder cover and/or the cylinder liner.

In a beneficial embodiment of the cylinder device the ratio of the volume of the pre-chamber and the compression volume of the combustion cylinder is between 0.2-1%, preferably 0.25-0.8%.

The compression volume is the minimal volume of the combustion chamber when the piston is in its top dead center (TDC).

Thus, even when the cylinder device comprises only one pre-chamber, the pre-chamber can have such a small volume, because the inflow of the gas-air mixture provides an effective combination of the gas flows within the combustion chamber.

In a preferred embodiment the combustion cylinder has a central outlet valve arranged in the cylinder cover. As the central outlet valve takes a central place in the cylinder cover, the outlet of pre-chamber must be arranged asymmetrically with respect to the main cylinder axis.

Preferably the distance between the outlet of the pre-chamber and the central outlet valve is between 0% and 105% of the distance between the outlet valve and the liner.

The outlet of the pre-chamber may be arranged in the cylinder cover close to the central outlet valve.

The outlet of the pre-chamber may be arranged in the cylinder liner, such that the outlet of the pre-chamber discharges the gas-air mixture into an opening in the liner which is fluid-connected with the combustion chamber. Hence, the distance between the outlet of the pre-chamber and the central outlet valve is greater than the distance between the cylinder liner and the outlet valve.

According to another aspect of the invention there is provided a method for feeding a gas-air mixture from a pre-chamber, preferably as described above, to a combustion chamber of an internal combustion engine, preferably in a cylinder device as described above.

The gas-air mixture is led through the outlet of a duct of a pre-chamber into the combustion chamber. The gas-air mixture flows in a circular flow around the main axis of the combustion cylinder and combines with the air being introduced into the combustion chamber from a turbo-charger.

In the following, the invention is further explained in embodiments by means of figures:
- Figure 1:: shows a schematic cross-sectional view of a first example of a pre-chamber;
- Figure 2:: shows a schematic cross-sectional view of a second example of a pre-chamber;
- Figure 3:: shows a schematic cross-sectional view of a third example of a pre-chamber
- Figure 4:: shows a schematic cross-sectional view of a first example of a cylinder device comprising a prechamber;
- Figure 5:: shows a schematic cross-sectional view of a second example of a cylinder device comprising a prechamber;
- Figure 6:: shows a schematic representation of a third example of a cylinder device comprising a pre-chamber;
- Figure 7:: shows a detail of the second example of figure 5.

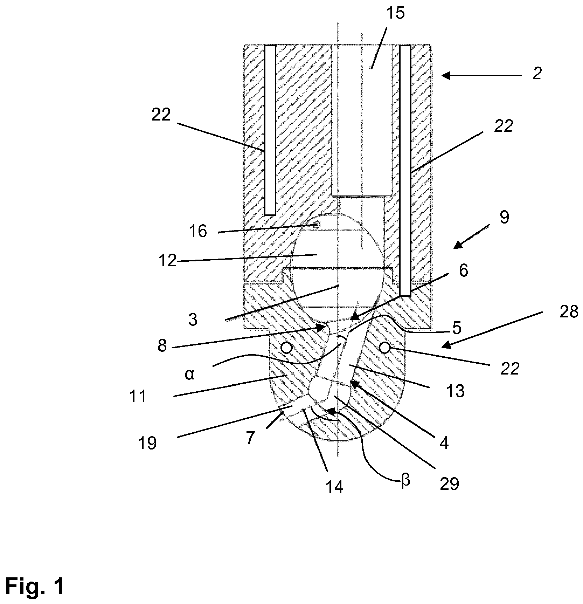

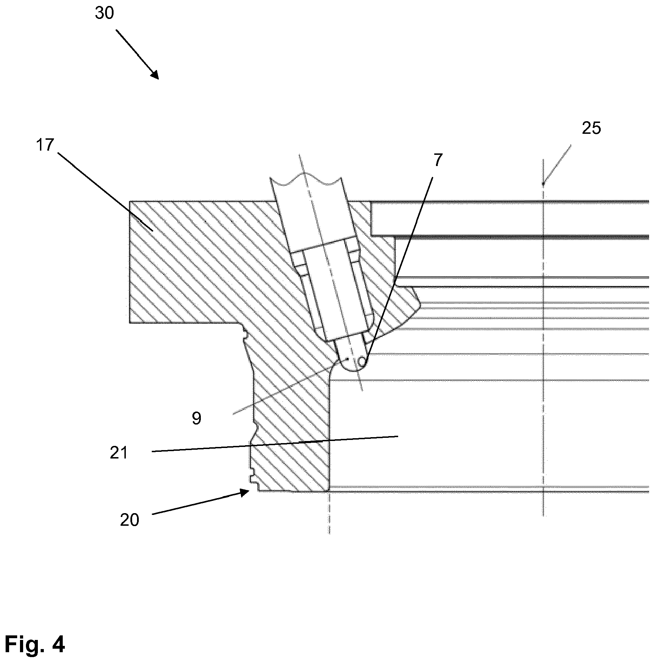

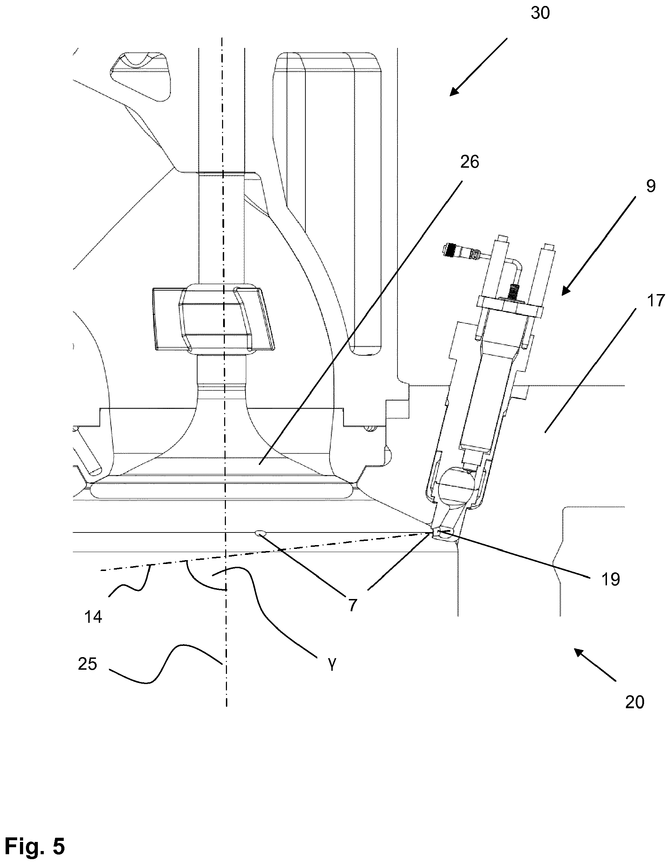

Figure 1 shows a schematic cross-sectional of a first example of a pre-chamber 9. The pre-chamber 9 comprises an ignition chamber 12 for igniting of a gas-air-mixture and a duct 4 for connecting the ignition chamber 12 with a main combustion chamber 21 (see Figures 4 and 5) of the cylinder 20 (see Figures 4 and 5).

The duct 4 comprises exactly one outlet opening 7.

The pre-chamber 9 comprises a housing 11 with an integrated, and preferably autarkic, cooling assembly 28. In this case the pre-chamber 9 comprises cooling channels 22, which end in the upper part 2 of the pre-chamber 9.

The duct 4 comprises a first duct section 13 with an inlet opening 6 of the duct 4 to the ignition chamber 12.

A first duct section 13 has a first longitudinal axis 5. The ignition chamber longitudinal axis 3 has an inclination relative to the first longitudinal axis 5. The first longitudinal axis 5 may be arranged at an angle α of 16° to 30° relative to the ignition chamber longitudinal axis 3.

The inlet opening 6 is arranged eccentrically, such that a tumble flow motion is formable in an ignition chamber 12.

The duct 4 comprises a second duct section 19 having a second longitudinal axis 14, which is inclined relative to the first longitudinal axis 5 and to the ignition chamber longitudinal axis 3. The second longitudinal axis 14 may be arranged at an angle β of 45° to 66° relative to the ignition chamber longitudinal axis 3.

The duct 4 further comprises a curved section 29, connecting the first duct section 13 and the second duct section 19.

The edges 8 at the inlet opening 6 are designed as soft edges.

The pre-chamber 9 comprises ignition means 15, in this case an ignition plug 16, for ignition of the gas-air mixture, which extends into an ignition chamber 12.

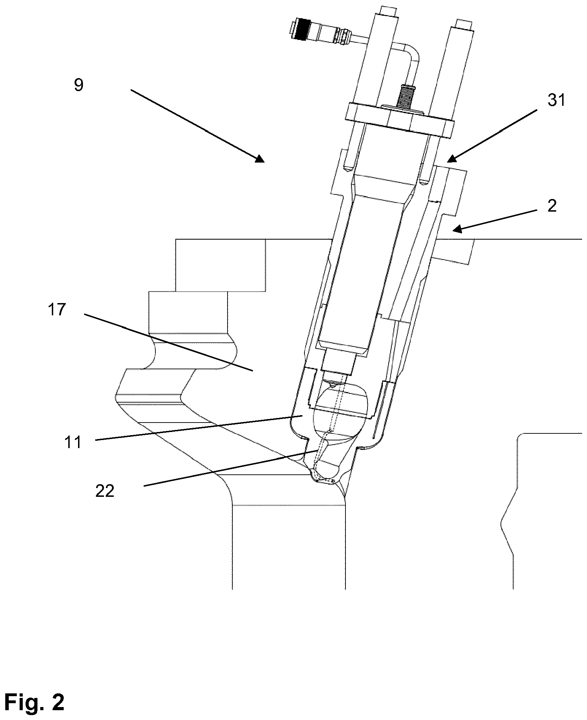

Figure 2 shows a schematic cross-sectional view of a second example of a pre-chamber 9.

The pre-chamber 9 is arranged in a cylinder cover 17.

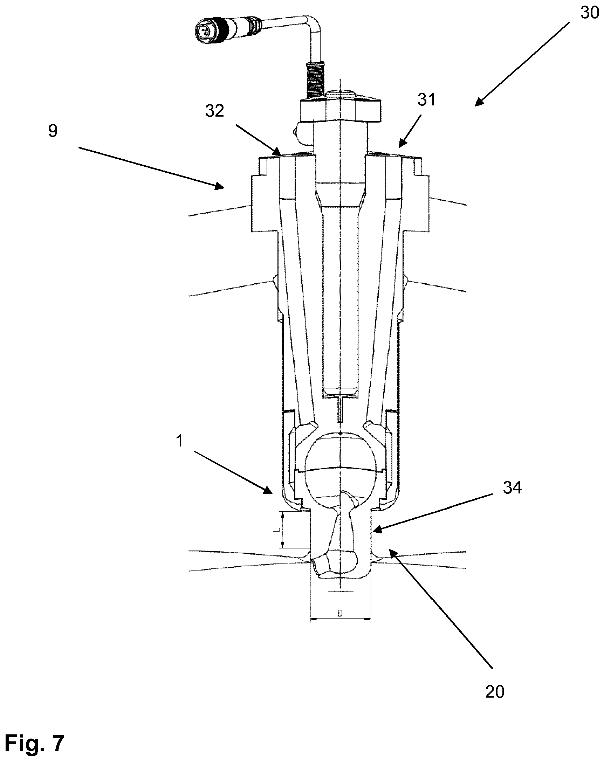

The housing 11 of the pre-chamber 9 comprises a cooling channel 22. The cooling channel 22 has a cooling channel inlet 31, which may be connected to a cooling fluid source (not shown in the figure). The cooling channel inlet 31 as well as a cooling channel outlet 32 (see figure 7) is arranged in an upper part 2 of the pre-chamber 9, such that the cooling assembly is autarkic and can be used independently of the cylinder cover 17.

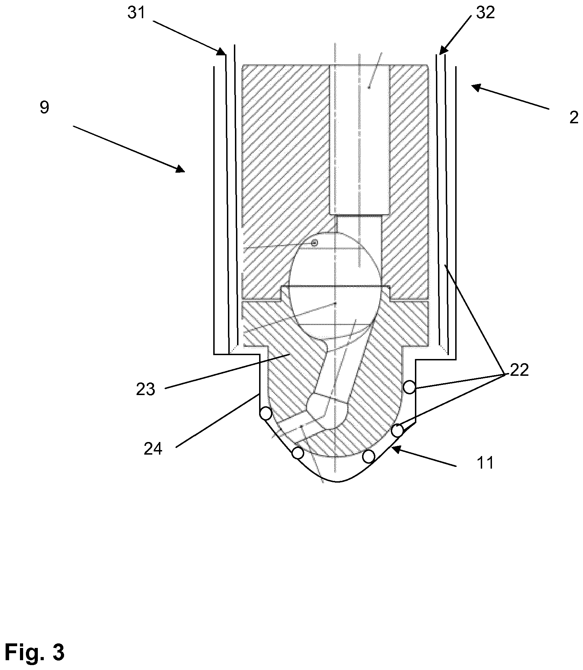

Figure 3 shows a schematic cross-sectional view of a third example of a pre-chamber 9. The housing 11 comprises an inner housing 23 and a casing 24, which may be made of a metal sheet, for holding cooling fluid close to inner housing 23. In this case a cooling channel 22 is arranged between the inner housing 23 and the casing 24. The cooling channel 22 comprises a cooling channel inlet 31 and a cooling channel outlet 32, ranged in the upper part 2 of the pre-chamber 9.

Figure 4 shows a schematic cross-sectional view of a first example of a cylinder device 30 comprising exactly one pre-chamber 9 arranged in the cylinder cover 17.

The pre-chamber 9 comprises exactly one duct outlet opening 7 which is arranged such that a gas-air mixture beam is formable in the combustion chamber 21. The duct outlet opening 7 is arranged such that the outflowing stream of the gas-air mixture is not directed towards the main axis 25 of the cylinder 20. Figure 5 shows a schematic cross-sectional view of a second example of a cylinder device 30 comprising a pre-chamber 9 as disclosed in Figure 2.

The combustion cylinder 20 of the cylinder device 30 has a central outlet valve 26 arranged in the cylinder cover 17.

The outlet 7 of the pre-chamber 9 is arranged in the cylinder cover 17.

Further pre-chambers 9, not disclosed in detail in the figure, each having exactly one outlet 7, may be arranged in the cylinder cover 17.

The second duct section 19 of the pre-chamber 9, having the second longitudinal axis 14, may be arranged at an angle γ of 70° to 80°, relative to the main axis 25 of the cylinder 20, such that the gas-air mixture is fed into the swirl of the gas-air stream within the cylinder 20.

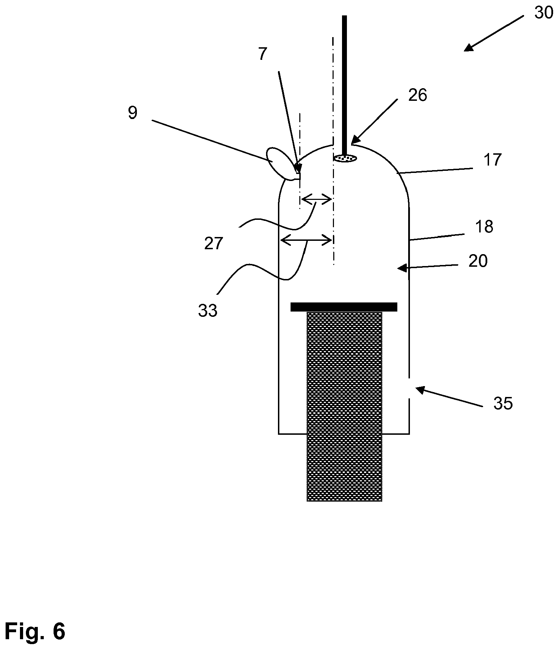

Figure 6 shows a schematic cross-sectional view of a third example of a cylinder device 30 comprising a pre-chamber 9.

The combustion cylinder 20 of the cylinder device 30 has a central outlet valve 26 and in inlet opening 35 being arranged in the cylinder cover 17.

The distance 27 between the outlet 7 of the pre-chamber 9 and the central outlet valve 26 is smaller than the distance 33 between the outlet valve 26 and the liner 18.

The pre-chamber 9 might also be arranged within the liner 18 of the cylinder (not shown in the figure). In this case the distance 27 between the outlet 7 of the pre-chamber 9 and the central outlet valve 26 could be greater than the distance 33 between the outlet valve 26 and the liner 18.

Figure 7 shows a detail of the second example of the cylinder device 30 as shown in figure 5.

Between the lower part 1 of the pre-chamber 9 and the combustion cylinder 20 there is a connection that allows a direct heat transfer, in this case a press fit connection.

The contact face 34 between the pre-chamber 9 and the combustion cylinder 20 is mainly formed as a circular cylinder, wherein the ratio between the diameter D and the lengths L is in the range of 1 to 4. Preferably, as in this case, the ratio is 1.5.

## Claims

1. Pre-chamber (9) for a cylinder (20) of an internal combustion engine for ignition of a gas/air mixture comprising an ignition chamber (12) for igniting of the gas-air-mixture and a duct (4) for connecting the ignition chamber (12) with a main combustion chamber (21) of the cylinder (20), **characterized in that** the pre-chamber (12) comprises a housing (11) with an integrated, and preferably autarkic, cooling assembly (28).

2. Pre-chamber (9) according to claim 1, wherein the housing comprises at least one cooling channel (22), having a, preferably one, cooling channel inlet (31) and a, preferably one, cooling channel outlet (32), wherein the cooling channel inlet (31) and the cooling channel outlet (32) in particular are arranged in an upper part (2) of the pre-chamber (9).

3. Pre-chamber (9) according to claim 1 or 2, wherein the housing (11) comprises an inner housing (23) and a casing (24), preferably made of a metal sheet, for holding cooling fluid close to inner housing (23).

4. Cylinder device (30) comprising a combustion cylinder (20) and a pre-chamber (9) according to any of the preceding claims.

5. Cylinder device (30), preferably according to claim 4, comprising a combustion cylinder (20) and a pre-chamber (9) for ignition of a gas/air mixture,
**characterized in that** there is a connection between the pre-chamber (9), preferably a lower part (1) of the pre-chamber (9), and the combustion cylinder (20), preferably a cover (17) and/or a liner (18) of the combustion cylinder (20), that allows a direct heat transfer, preferably a press fit connection.

6. Cylinder device (30) according to claim 4 or 5, wherein the pre-chamber (9) comprises an ignition chamber (12) for igniting of the gas-air-mixture with an ignition chamber longitudinal axis (3) and a duct (4) for connecting the ignition chamber (12) with a main combustion chamber (21) of the cylinder (20), wherein the duct (4) comprises a first duct section (13) with an inlet opening (6) of the duct (4) to the ignition chamber (12), the first duct section (13) having a first longitudinal axis (5) and
wherein the ignition chamber longitudinal axis (3) has an inclination relative to the first longitudinal axis (5), and the inlet opening (6) is arranged eccentrically, such that a tumble flow motion is formable in an ignition chamber (12),
wherein the duct (4) comprises a, preferably exactly one, outlet opening (7) which is arranged such that a gas-air mixture beam is formable, and wherein the duct (4) comprises a second duct section (19) comprising a second longitudinal axis (14), which is inclined relative to the first longitudinal axis (5) and to the ignition chamber longitudinal axis (3).

7. Cylinder device (30), preferably according to any of claims 4-6, comprising a combustion cylinder and exactly one pre-chamber (9) for ignition of a gas/air mixture,
the pre-chamber (9) comprising an ignition chamber (12) for igniting of the gas-air-mixture with an ignition chamber longitudinal axis (3) and
a duct (4) for connecting the ignition chamber (2) with a main combustion chamber of the combustion cylinder,
wherein the duct (4) comprises a first duct section (13) with an inlet opening (6) of the duct (4) to the ignition chamber (12), the first duct section (13) having a first longitudinal axis (5) and
wherein the ignition chamber longitudinal axis (3) has an inclination (A) relative to the first longitudinal axis (5),
and the inlet opening (6) is arranged eccentrically, such that a tumble flow motion is formable in an ignition chamber,
wherein the duct (4) comprises exactly one outlet opening (7) which is arranged such that a gas-air mixture beam is formable, **characterized in that** edges (8) at the inlet opening (6) are designed as soft edges and **in that** the duct (4) comprises a second duct section (19) comprising a second longitudinal axis (14), which is inclined relative to the first longitudinal axis (5) and to the ignition chamber longitudinal axis (3).

8. Cylinder device (30) according to claim 6 or 7, wherein the second duct section (19) has a cylindrical part or tapers towards the outlet opening (7).

9. Cylinder device (30) according to claim 6, 7 or 8, wherein the ratio of a volume of the ignition chamber (12) and the cross-section of the outlet opening (7) is between 200 mm and 1000 mm.

10. Cylinder device (30) according to any of claims 6 to 9, wherein the first longitudinal axis (5) is arranged at an angle (α) of substantially 0.1° to 80° relative to the ignition chamber longitudinal axis (3), preferably 10°to 45° and most preferably 16° to 30° relative to the ignition chamber longitudinal axis (3)
and/or
wherein the second longitudinal axis (14) is arranged at an angle (β) of substantially 0.2° to 90° relative to the ignition chamber longitudinal axis (3), preferably 20°to 80° and most preferably 45° to 66° relative to the ignition chamber longitudinal axis (3)
and/or
wherein the second duct section (19) is arranged at an angle (γ) of substantially 0.1° to 90°, preferably of 40° to 85°, more preferably 70° to 80°, relative to the main axis (25) of the cylinder (20).

11. Cylinder device according to any of claims 6 to 10, wherein the duct (4) comprises a curved section (29), preferably comprising a radius of curvature in a range of one half time a maximum cross section of the ignition chamber (12) normal to the ignition chamber longitudinal axis (3) to two times a maximum cross section of the ignition chamber (12) normal to the ignition chamber longitudinal axis (3) .

12. Cylinder device (30) according to any of claims 4 to 11, wherein the pre-chamber (9) comprises ignition means (15) for ignition of the gas-air mixture, preferably an ignition plug (16), which extends into an ignition chamber (12) .

13. Cylinder device (30) according to any of claims 4 to 12, wherein the pre-chamber (9) is arranged eccentrically with respect to the main axis (25) of the combustion cylinder (20)
and/or
wherein the pre-chamber comprises a top section (10) and a lower part (1), which is designed asymmetrically relative to the ignition chamber longitudinal axis (3).

14. Cylinder device (30) according to any of claims 4 to 13, wherein the pre-chamber (9) is arranged in the cylinder cover (17) and/or
wherein the pre-chamber (9) is arranged in the cylinder liner (18).

15. Cylinder device (30) according to any of claims 4 to 14, wherein the ratio of the volume of the pre-chamber (9) and the compression volume of the combustion cylinder (20) is between 0.2-1%, preferably 0.25-0.8%.

16. Cylinder device (30) according to any of claims 4 to 13 or 15, wherein the combustion cylinder (20) has a central outlet valve (26) arranged in the cylinder cover (17), wherein preferably the distance (27) between the outlet (7) of the pre-chamber (9) and the central outlet valve (26) is between 0% and 105% of the distance (33) between the outlet valve (26) and the liner (18).
